# EUROPEAN PATENT APPLICATION

(11) **EP 0 959 548 A2**
(43) Date of publication of application: **24.11.1999**
(21) Application number: 99201551.1
(22) Date of filing: 15.05.1999
(51) Int. Cl.: H02J 7/00, H02J 9/06

(54) **Electronic control circuit for the recharging of an accumulator battery, in particular for emergency lamps**

(30) Priority: 20.05.1998 IT MI981111
(71) Applicant: Beghelli S.p.A., 40050 Monteveglio, Bologna (IT)
(72) Inventor: Beghelli, Gian Pietro, 40050 Monteveglio, Bologna (IT)
(74) Representative: Zanardo, Giovanni

(57) **Abstract**

An electronic control circuit for the recharging of an accumulator battery (B), in particular for emergency lamps, comprising a power supply section constituted by a charging device (10) of the accumulator battery (B), a sensing unit (20) for the network line and a power supply unit (30) of a control section (40), serving the purpose of commanding and controlling the operating functions of the emergency lamp.

The charging device (10) of the battery (B) according to the invention allows recharging the battery (B), whenever its energy level falls below a predetermined value, so as to recharge it more quickly then in the traditional designs.

## Description

This invention refers to an electronic control circuit for the recharging of an accumulator battery, in particular for emergency lamps.

It is known that emergency lamps are generally powered by an accumulator battery, which jumps into action and supplies the power needed for starting-up the lamp, automatically and at the instant a power outage, for whatever reason, occurs in the main network supplying electrical power to a given environment.

The accumulator battery must therefore necessarily be kept at a charge adequate to supply an appropriate current intensity to operate all the emergency lights connected to the same.

For this purpose the battery is supplied by the main network, during its normal operation, by a charging device designed to provide the same with a recharging cycle, whenever the level of the charge falls below a certain pre-established value.

In particular, the existing standards in the trade describe the ideal energy increments that an accumulator battery must attain during its recharging phase, as well as the maximum time limit allowed for the recharging phase. The same standards further outline the various procedures to verify the mentioned battery's operating autonomy.

The purpose of this invention is to indicate an electronic control circuit for the recharging of an accumulator battery for emergency lamps, capable of allowing to perform a procedure to verify the level of the charge attained by the battery, and therefore to implement a recharging cycle of the same, in case of need, in a substantially shorter period of time than by any existing techniques, while at the same time employing electronic components and electrical circuits capable of measuring the operating conditions of traditional emergency lamps.

Another purpose of this invention is to indicate an electronic control circuit for the recharging of an accumulator battery for emergency lamps, capable of achieving a better efficiency, with respect to the known art, during the battery's charging phase.

A further purpose of this invention is to produce an electronic control circuit for the recharging of an accumulator battery for emergency lamps, capable of ensuring its adherence to the existing electrical standards in the trade.

Not the last purpose of the invention is to indicate an electronic control circuit for the recharging of an accumulator battery for emergency lamps capable of being produced easily and economically, without resorting to complex or expensive technologies and /or relatively costly components, based on the advantages it can afford.

These and other purposes are achieved by an electronic control circuit for the recharging of an accumulator battery, in particular for emergency lamps, according to the claim 1, which is being referred to for brevity.

In an advantageous manner, a switching device of an electronic circuit for the measurement of the operating conditions of emergency lamps is used for the purpose of recharging an accumulator battery, according to an appropriate procedure and in case of need, after verifying the status of its charge by a self-diagnosing process.

This process allows supplying electric power to an accumulator battery at essentially ambient temperature, so as to reach a maximum predetermined charge level in a shorter time than by the known state of the art.

Further purposes and advantages of this invention will become evident from the following description and related drawings, provided for purely explicative and non-limiting purposes, in which:
- Figure 1 shows an electronic control circuit for the recharging of an accumulator battery, in particular for emergency lamps, according to this invention;
- Figure 2 shows a Cartesian graph illustrating the time evolution of the charging current of an accumulator battery, during a traditional recharging process;
- Figure 3 shows a Cartesian graph illustrating the time evolution of the charging current of an accumulator battery, during a recharging process according to the invention.

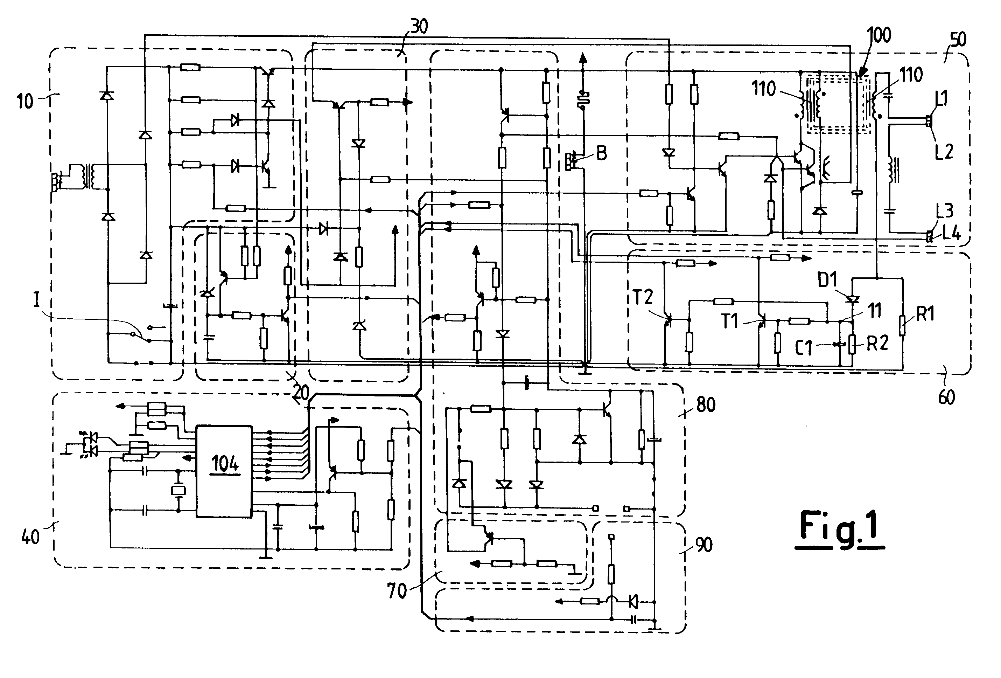

With particular reference to the Figure 1, an electronic control system for the recharging of an accumulator battery for emergency lamps, generally indicated by B, comprises a power supply section constituted by a charging device 10 of the mentioned battery B, an electronic device sensing the network voltage, generally indicated by 20 and a power supply unit 30 for a control unit 40, designed to command and control the operating functions of the emergency lamp.

The electronic circuit according to the invention also comprises a starting-up system 50 of the emergency lamp supplied by the battery B, which is associated with an electronic device 60 for the measuring of the emergency lamp's operating conditions.

The numbers 70, 80 and 90 indicate further portions of the electronic circuit capable of providing the control section 40 with commands relating to the self-diagnosing functions of the charge status of the battery B, and of enabling and disabling the emergency functions or the starting-up of the lamps in case of a network power outage.

The battery B supplies electrical power for the starting-up of the emergency lamp, which is connected to the electrical terminals shown by the letters L1, L2, L3, and L4.

An oscillator starting-up device, generally indicated by 100 and comprising a transformer apparatus 110, is provided between the accumulator battery B and the connecting terminals L1, L2, L3 and L4.

The secondary circuit of the transformer 110 is connected to the earth through a resistor R1 of the electronic device 60 for measuring the emergency lamps' operating conditions.

A peak sensing device is provided in parallel with the resistor R1, constituted by a diode D1, a condenser C1 and a resistor R2; the outlet 11 of the peak sensing device is simultaneously supplied to two different polarization networks for the base of two signaling transistors T1, T2, whose collector is connected to the power supply voltage and an inlet corresponding to a micro-processor 104 of the control section 40, while the emitter is connected to the earth.

The emergency lamp may be of an incandescent or fluorescent type.

Apart from signaling the operating conditions of the emergency lamps, the microprocessor 104 may eventually perform other functions needed to preserve the lamp's various functional units, such as for instance the deactivation of a starting-up command in case a lamp is missing or malfunctioning.

The electrical power needed to start-up the emergency lamps in case of a network voltage failure is supplied by the accumulator battery B, charged by the device 10; a check on the charge level attained by the battery B is also performed by running an autonomy test, which is at any case a procedure standardized by the existing standards on the subject.

During the self-diagnosing phase of the charge status of the battery B, an appropriate control circuit disconnects the mentioned battery B from the charging device 10, by using a switching or routing device I; at this point, the battery B is directly connected to the charging function of the emergency lamps, and the measuring time - which is needed to ensure that the charge level of the battery B reaches a minimum predetermined value while it continues to supply power to the charging function - constitutes one of the efficiency parameters of the same.

In the following the router I is commuted to a direct connecting position between the charging device 10 and the accumulator battery B, so as to perform a recharging of the same cyclic type and in a manner that the electrical power level available at its interior is again capable of reaching a predetermined maximum value in a shorter time compared to that afforded by traditional techniques.

In particular, according to the known state of the art, the buffer batteries are recharged continuously at a unit current intensity equal to the value C/17, where C represents the capacity of the buffer battery, expressed in Ampere/hour.

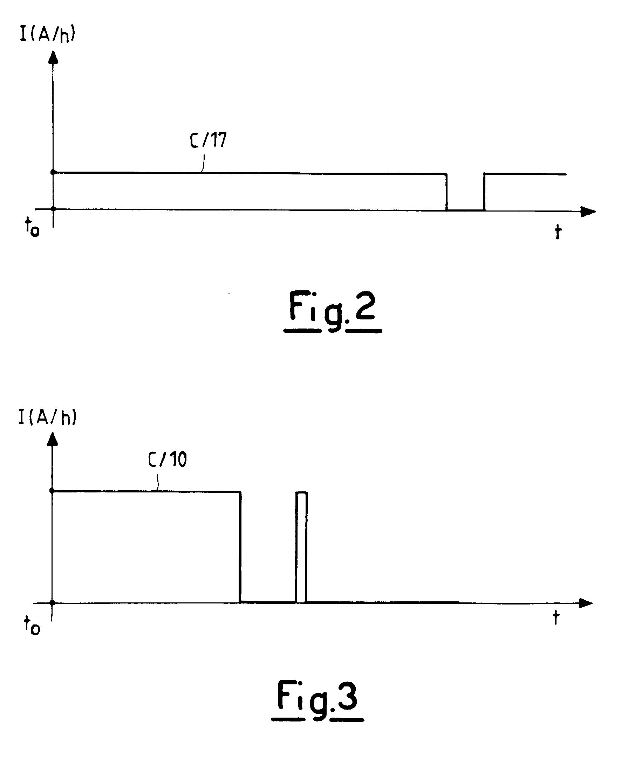

This recharging method is clearly outlined in the Cartesian graph of Figure 2.

According to this invention, however, the recharging of the accumulator battery B is achieved by connecting the charging device 10 for a typical time period of 14-16 hours, followed by disconnecting the same device 10, so as to reconnect it to the battery B for timed minimum periods with respect to the former (equal to about 5 minutes), so as to achieve a recharging over small increments in time, and obtain a greater level of efficiency of the battery B with respect to that of the known art, during the accumulating phase. The unit electrical power supplied to battery B is set at a value of C/10, where C represents the current flow capacity of the battery B, expressed in Amperes/hr.

The mentioned recharging method performed by the electronic recharging circuit according to this invention is clearly illustrated in the Cartesian graph of Figure 3, which shows that the latency time of the emergency lamp, between a recharging phase C/10 and the subsequent charging impulses timed over a period of time, is about 10-14 hours, a latency time period measured during the buffer battery's recharging phase according to the known state of the art, which amounts to about 20-24 hours.

According to this invention, it is therefore possible to make an innovative use of an electronic control circuit for the recharging of an accumulator battery B for emergency lamps, so as to charge the battery B in time, in an extremely advantageous and reliable manner, as described by the Cartesian graph shown in Figure 2.

The above description clearly outlines the characteristics and the advantages of the electronic control circuit for the recharging of an accumulator battery, in particular for emergency lamps, which is the object of this invention.

In particular, these are represented by:
- Flexibility, simplicity and ease of installation and wiring of the circuit,
- Versatility of usage of the circuit in existing plants, without applying modifications to the same,
- Ease of integrating the circuit with other electric systems, and reliability from the viewpoint of its simplicity of usage and methods of maintenance,
- Accumulator battery recharging times and cycles, shorter than those of the known art,
- Observance of the national and international standards applicable in the branch,
- Limited costs in regard to the known art, based on the obtainable advantages,
- A battery temperature value which remains practically constant and essentially close to the ambient temperature value during the recharging phase.

It is obvious that numerous other variants may be applied to the electronic control circuit for the recharging of an accumulator battery, in particular for emergency lamps subject of this invention, without thereby abandoning the innovative principles inherent in the inventive idea, and it is likewise clear that in the practical implementation of the invention the materials, the shapes and sizes of the details shown may be of any kind depending on the requirements, and that the same may be substituted by others of an equivalent nature.

## Claims

1. An electronic control circuit for the recharging of an accumulator battery (B), in particular for emergency lamps, of a type comprising at least one environmental lighting device, at least one lamp capable of operating under emergency conditions, power supply means (30), control means (40) and starting-up means (50) of said emergency lamps, an accumulator battery (B) for the power to be supplied to said lamp, a charging device (10) for said battery (B), a sensing unit (20) of the network voltage, means for measuring (60) of said lamp's operating conditions and means (70, 80, 90) capable of sending commands to said control devices (40) for diagnosing the functions of the charge status of said battery (B) and for enabling and disabling the starting-up of said lamp in the absence of a network power supply, characterized in that during the recharging phase said battery charging device (B) is connected to said battery (B) for a predetermined first period, then disconnected for a pre-established latency period and finally reconnected for at least one time period essentially shorter than the first period.

2. An electronic circuit according to claim 1, characterized in that said control devices (40) comprise at least one micro-processor (104) which commands the activation or deactivation of a self-diagnosing process of the charge status of said battery (B) and turns said lamp on and off based on at least one electrical parameter of said power supply network.

3. An electronic circuit according to claim 1, characterized in that said emergency lamps comprise lamps of a discharge and fluorescence type.

4. An electronic circuit according to the claims 1 and 2, characterized in that said micro-processor (104) activates or deactivates a self-diagnosing process of the charge status of said battery (B), said charging device (10) being disconnected from said battery (B) and said battery (B) is connected to said emergency lamp.

5. An electronic circuit according to claim 1, characterized in that said said emergency lamp is connected to a secondary transformer circuit (110) being part of an oscillator device (100) of said starting-up devices (50).

6. An electronic circuit according to claim 1, characterized in that said first period of time during which said charging device (10) is connected to said accumulator battery (B) is essentially equal to 14 hours.

7. An electronic circuit according to claim 1, characterized in that said latency period of said lamp is essentially equal to 10 - 14 hours.

8. An electronic circuit according to claim 1, characterized in that said charging device (10) supplies a unit current intensity equal to 1/10 of the capacity current of said accumulator battery (B).

9. An electronic circuit according to claims 1 and 8, characterized in that said time intervals during which said charging device (10) is reconnected to said battery (B) are associated with a series of separate time impulses essentially equal to 5 minutes.
